# EUROPÄISCHE PATENTSCHRIFT

(11) **EP 3 258 595 B1**
(45) Veröffentlichungstag und Bekanntmachung des Hinweises auf die Patenterteilung: **23.10.2024**
(21) Anmeldenummer: 17175614.1
(22) Anmeldetag: 13.06.2017
(51) Int. Cl.: H02S 20/26, H02S 20/22, E04F 13/08, E04D 3/365

(54) **VERFAHREN UND MITTEL ZUR BEDECKUNG VON GEBÄUDEHÜLLFLÄCHEN MIT PHOTOVOLTAIKMODULEN**
METHOD AND MEANS FOR COVERING BUILDING ENVELOPE SURFACES WITH PHOTOVOLTAIC MODULES
PROCÉDÉ ET MOYEN DE RECOUVREMENT DE SURFACES D'ENVELOPPE DE BÂTIMENT AU MOYEN DE PANNEAUX PHOTOVOLTAÏQUES

(30) Priorität: 16.06.2016 CH 7752016
(43) Veröffentlichungstag der Anmeldung: 20.12.2017
(73) Patentinhaber: Schmid, René, 8049 Zürich (CH)
(72) Erfinder: Schmid, René, 8049 Zürich (CH)
(74) Vertreter: Prins Intellectual Property AG

(56) Entgegenhaltungen:
- EP-A1- 1 136 632
- DE-U1- 20 304 988
- DE-U1- 202008 012 164

## Beschreibung

### Technisches Gebiet

Die vorliegende Erfindung beschreibt ein Mittel für die Bedeckung von Gebäudehüllflächen mit Photovoltaikmodulen und für die Bedeckung von Gebäudehüllflächen mit dem Mittel.

### Stand der Technik

Photovoltaikanlagen (PV-Anlagen) umfassen eine Mehrzahl von Photovoltaikmodulen (PV-Modulen) die heute auf möglichst vielen freien Flächen montiert werden, um die Stromversorgung mit erneuerbarer Energie in grossen Schritten voranzutreiben.

Die Bedeckung von Gebäudehüllflächen, insbesondere von Gebäudeintegrierten Anlagen an Fassadenflächen ist heute mit hohen Kosten verbunden, da ein grosser Aufwand für das genaue Planen und Einmessen des Bauwerkes und eine massgenaue Vorfabrikation der Photovoltaikmodule mit verschiedenen Spezialgrössen notwendig ist. Die üblichen Systeme umfassen in der Regel einen oder mehrere Halterahmen, welche an die Gebäudehüllfläche genau angepasst werden müssen, sodass wiederum auf die Gebäudehüllfläche angepasste PV-Module millimetergenau zwischen Fenster und Vorsprünge in der Fassadenfläche eingepasst und dort im Halterahmen festgeschraubt werden können. Ein Halterahmen verzeiht keine Ungenauigkeiten bei der Abmessung, da die PV-Module ansonsten nicht befestigt werden können. Mit derartigen Halterahmen sind Unebenheiten und Arbeitstoleranzen der Gebäudehüllfläche schwer auszugleichen.

Aus der DE-20 2008 012 164 U1 ist eine Glasfassade bekannt, mit der eine überlappende Abdeckung in Tiefenrichtung erzielt wird. Die Überlappung begrenzt sich jedoch auf einen Bereich von 0 - 60 mm, bevorzugt bei 20 mm. Die Halterung besteht aus einer Mehrzahl von verschiedenen Trägerelemente, die je nach Verwendung in unterschiedlichen Kombinationen zusammengestellt und montiert werden müssen.

Dieses Dokument wird als nächstliegender Stand der Technik gesehen, da es sich auch um eine Bedeckung der Gebäudehüllfläche handelt, obwohl es sich um eine Glasfassade handelt, bei der überlappende benachbarte Glasplatten keine funktionale Einbussen ergeben. Dies im Gegensatz zu photovoltaischen Modulen, die je nach Überlappung eine Reduktion der energetischen Nutzung zur Folge haben und dies folglich nach Möglichkeit vermieden werden soll. Für eine optimale Nutzung wird eine dichte Verlegung der Module angestrebt, die bisher immer mit rasterförmigen Trägersystemen erreicht worden ist.

Um die PV-Module möglichst grossflächig auf der Gebäudehüllfläche zu verteilen, sind für verschiedene Stockwerkshöhen PV-Module mit unterschiedlichen Modulgrössen nötig. Neben dem vergrösserten Aufwand der Herstellung von PV-Modulen mit unterschiedlichen Modulgrössen, ist auch eine erschwerte Montage die Folge, bei welcher es leicht zu Fehlern kommen kann. Weist das Bauwerk nicht die exakt gewünschte Bemassung auf, dann stockt der Aufbau der PV-Anlage. Um einen maximalen Stromertrag zu erreichen, wird darauf geachtet, die gesamte Fläche der PV-Module der Sonneneinstrahlung zugänglich zu machen.

### Darstellung der Erfindung

Die vorliegende Erfindung hat sich zur Aufgabe gestellt ein Mittel für die Bedeckung von Gebäudehüllflächen mit Photovoltaikmodulen zu schaffen, wobei die Kosten für die Vorfabrikation und die Endmontage der Photovoltaikmodule deutlich gesenkt sind.

Dies wird durch das Mittel mit den Merkmalen des Patentanspruches 1 erreicht.

Durch ein erfindungsgemässes Verfahren nach den Ansprüchen 8 - 12 kann eine kostenintensive Vermessungstechnik wegfallen. Es können auf der gesamten Gebäudehülle PV-Module mit denselben Abmessungen geschuppt angeordnet werden mit dem Mittel gemäss den Ansprüchen 1 - 6. Durch ein variables Überschieben der PV-Module kann die zu belegende Gebäudehüllfläche nahezu vollständig belegt werden, wobei nur noch vereinzelt kostenintensive Sondergrössen der PV-Module nötig sind.

Der Anspruch 7 offenbart die Verwendung des Mittels nach Anspruch 1.

Hier beschrieben erfolgt die Fixierung gegen ein horizontales Verschieben der Photovoltaikmodule durch Befestigung an einem einzigen Montagepunkt, jedoch so dass die vertikale Verschiebbarkeit erhalten bleibt. Das PV-Modul wird nicht an einem Halterungspunkt festgeklemmt, sodass eine "lose" Halterung besteht. Die Halteposition an den viereckigen Photovoltaikmodulen liegt jeweils bei mindestens zwei übereinanderliegenden Ecken ganz am Rand des Photovoltaikmoduls.

### Kurze Beschreibung der Zeichnungen

Ein bevorzugtes Ausführungsbeispiel des Erfindungsgegenstandes wird nachstehend im Zusammenhang mit den anliegenden Zeichnungen beschrieben.
- Figur 1: zeigt eine perspektivische schematische Ansicht eines Gebäudes mit einer Gebäudehüllfläche, wobei die Fassadenfläche und die Dachfläche teilweise mit Photovoltaikmodulen gemäss hier vorgestelltem Verfahren geschuppt bedeckt sind.
- Figur 2a: zeigt eine perspektivische Ansicht eines Halteelementes, während
- Figur 2b: eine perspektivische Ansicht eines Bügelschuhs eines Halteelementes mit eingeschobenen PV-Modulen zeigt.
- Figur 3: zeigt eine schematische Ansicht einer teilweise dreilagig geschuppten Bedeckung einer Gebäudehüllfläche mit PV-Modulen.
- Figur 4: zeigt eine schematische Ansicht einer teilweise vierlagig geschuppten Bedeckung einer Gebäudehüllfläche mit PV-Modulen.
- Figur 5a: zeigt eine perspektivische Ansicht des Halteelements gemäss Figur 2a, in welchem die Randbereiche von Photovoltaikmodulen teilweise überlappend und damit geschuppt angeordnet sind, während
- Figur 5b: eine Schnittansicht entlang der Linie A-A aus Figur 5a zeigt und
- Figur 5c: eine weitere Schnittansicht von vier PV-Modulen mittels Halteelement befestigt an einer Fassade zeigt.

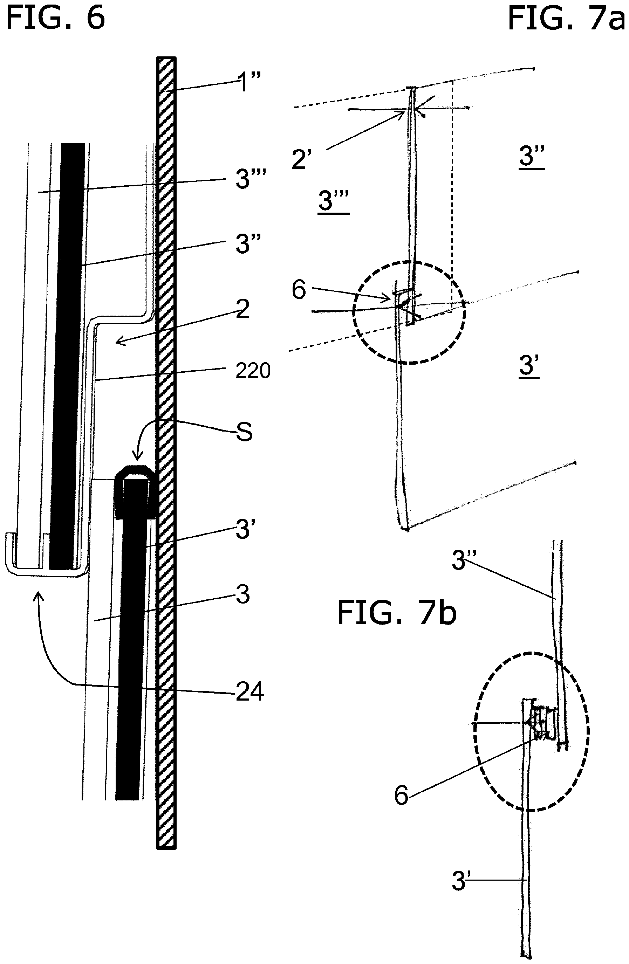

- Figur 6: zeigt eine detaillierte Schnittansicht geschuppt befestigter PV-Module, wobei die erste Lage, die der Fassade am nächsten liegt mit einem Schutzprofil ausgestattet ist.
- Figur 7a: zeigt eine schematische Ansicht von PV-Modulen die geschuppt in Halteelementen hängend an einer Fassadenfläche angeordnet sind, während
- Figur 7b: eine schematische Ansicht des Überlappungsbereiches zwischen einer ersten Lage und einer zweiten Lage von PV-Modulen zeigt.

### Beschreibung

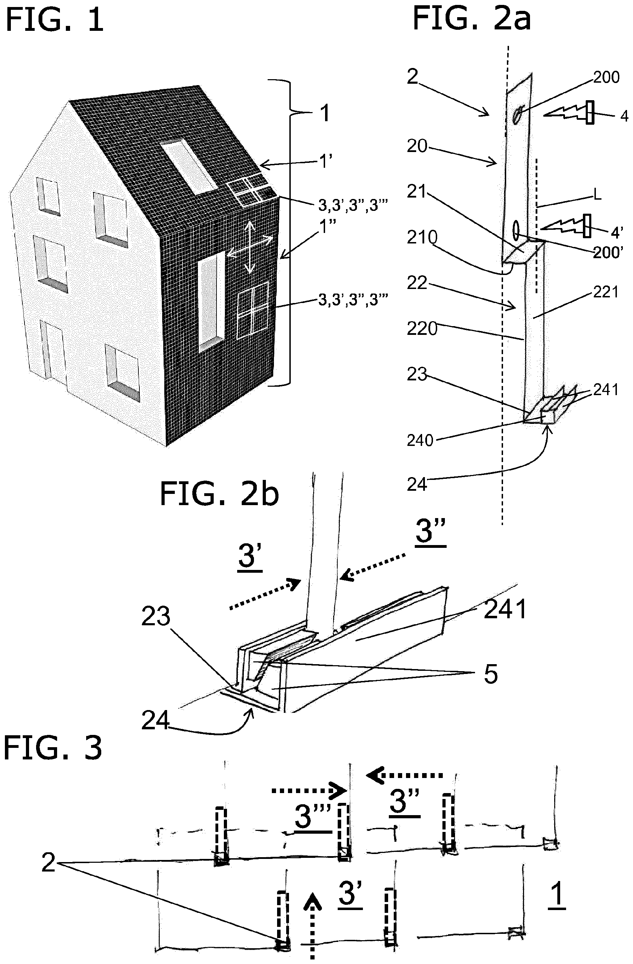

Als Gebäudehüllfläche 1 wird hier die Fläche eines Daches 1' oder einer Fassade 1" bezeichnet. Wie in Figur 1 gezeigt, kann mit dem hier präsentierten Mittel 2 die Fassade 1" und das Dach 1' mit Photovoltaikmodulen 3, 3', 3", 3‴ ausgestaltet werden, wobei die Photovoltaikmodule 3, 3', 3", 3‴ in unterschiedlichen Lagen geschuppt auf der Gebäudehüllfläche 1 angeordnet sind. Dabei werden Photovoltaikmodule 3, 3', 3", 3"', die in Standardgrössen vorliegen flächig verteilt angeordnet. Die Photovoltaikmodule/ PV-Module 3 sind Teil einer Photovoltaikanlage, wobei die Photovoltaikmodule 3 mit Verbindungskabeln versehen sind, die auf der Rückseite verlaufen und an Zuleitungskabeln anschliessbar sind, welche in einen Wechselrichter geführt werden.

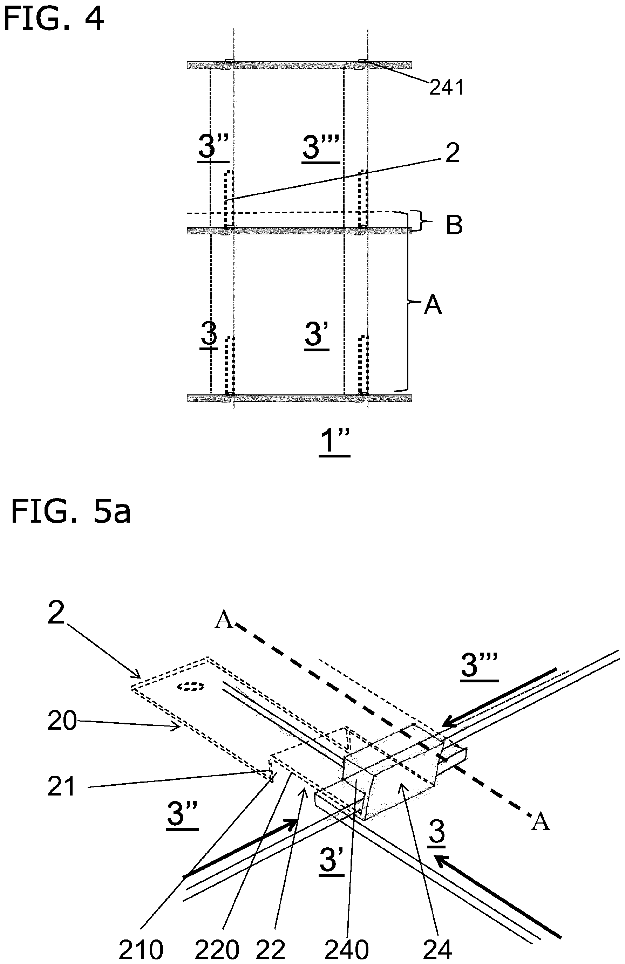

Die heute genutzten PV-Module 3, 3', 3", 3‴ weisen eine Bypass-Diode auf, wodurch auch bei teilweiser Verschattung ein optimaler Stromertrag gewährleistet werden kann. Auch die durch die Schuppung oder Schuppendeckung entstehende teilweise Verschattung der PV-Module 3, 3', 3", 3‴ wird durch die Bypass-Diode abgefangen, da auch teilbedeckte PV-Module 3, 3', 3", 3‴ aktiv bleiben. Die geschuppte Bedeckung bzw. teilweise überlappende Bedeckung in mehreren PV-Modullagen muss ohne Verletzung der PV-Module 3, 3', 3", 3‴ möglich sein. Mit dem hier vorgestellten Verfahren können handelsübliche PV-Module 3, 3', 3", 3‴ fester Grössen ohne weiteren Zuschnitt oder Anbringung einer Lochung ausreichend stabil an einer Fassadenfläche 1" oder Dachfläche 1' montiert werden. Die absichtliche teilweise Verschattung von PV-Modulen 3, 3', 3", 3‴ und damit eine Herabsetzung des Wirkungsgrades der PV-Anlage nimmt man in Kauf für ein erleichtertes kostengünstigeres Aufbauverfahren, wobei auch der ästhetische Gesamteindruck der geschuppten Fassadenfläche 1" verbessert wird. Mit den Doppelpfeilen in Figur 1 sind Einschubrichtungen der verschiedenen PV-Module 3, 3', 3", 3‴ angedeutet, was auch in Figuren 3 und 5a näher erläutert wird.

Damit die Gebäudehüllfläche 1 mit Photovoltaikmodulen 3, 3', 3", 3‴ bedeckt und die PV-Module 3, 3', 3", 3‴ fixiert werden können, werden vorgängig Halteelemente 2, wie in Figur 2a gezeigt in Form eines Befestigungsbügels 2 an der Dachfläche 1' oder der Fassadenfläche 1" befestigt.

Das Halteelement 2 weist in Richtung einer Halteelementlängsachse L einen Befestigungssteg 20 auf, an welchen sich eine abgewinkelte Wand 21 anschliesst. Befestigungssteg 20 und die Wand 21 sind zueinander etwa rechtwinklig verlaufend angeordnet. Von der Wand 21 geht der Befestigungsbügel 2 in Längsrichtung L in einen Haltesteg 22 mit einer Haltestegrückseite 220 und einer Haltestegvorderseite 221 über. Die Wand 21 und der Haltesteg 22 sind ebenfalls zueinander etwa rechtwinklig verlaufend gestaltet. Eine Rückseite 210 der Wand 21 weist in Richtung Haltesteg 22. Am von der Wand 21 abgewandten Ende des Haltestegs 22 ist ebenfalls abgewinkelt eine Auflagewand 23 angeordnet. Der Befestigungssteg 20 und der Haltesteg 22 sind etwa parallel zueinander verlaufend ausgestaltet. Durch die Abwinklung weisen die Wand 21 und die Auflagewand 23 vom Befestigungssteg 20 und Haltesteg 22 etwa senkrecht weg. Auf der Auflagewand 23 ist ein Bügelschuh 24 angeordnet, welcher von einer Bügelschuhstirnfläche 240 und Bügelschuhwänden 241 gebildet wird.

Das Halteelement 2 weist mindestens ein Durchgangsloch 200, den Befestigungssteg 20 querend, auf und kann mit einem Befestigungsmittel 4 auf der Gebäudehüllfläche 1 fixiert werden. Bevorzugt wird das Halteelement 2 mit zwei Befestigungsmitteln 4, 4' entlang des Befestigungsstegs 20 an der Gebäudehüllfläche 1 befestigt. Durch das Unterlegen von Unterlagsscheiben unter den Haltebügel 20 beim Befestigungsmittel 4, 4' kann der Winkel zwischen Haltebügel 22 und Gebäudehüllfläche 1 je nach Schuppungsstärke angepasst werden.

Mit der gestrichelten Linie ist eine senkrechte Fassadenfläche angedeutet. Bevorzugt ist das mindestens eine Befestigungsmittel 4, 4' als Schraube ausgeführt, es können aber auch Bolzen, Nägel oder Krampen, verwendet werden, welche mit einem Bolzensetzgerät bzw. einer Nagelpistole in die bestehende Fassade 1" getrieben werden. Die Halteelemente 2 können einfach mit den Befestigungsmitteln 4, 4' an einer Bestandsfassade befestigt werden, was vor allem bei Fassadenrenovationen bzw. -sanierungen einfach und schnell durchführbar ist. Die Befestigung des Halteelmentes 2 an der Fassadenfläche 1" erfolgt derart, dass der Befestigungssteg 20 etwa parallel zur Fassadenfläche 1" verlaufend befestigt ist. Entsprechend verläuft auch der Haltesteg 22 im montierten Zustand etwa parallel zur Fassadenfläche 1".

Aus Stabilitätsgründen sollte das Halteelement 2 aus Metall gefertigt sein, wobei ein Stahlblech mit geeigneter Wandstärke bevorzugt ist. Im Wesentlichen besteht der Befestigungsbügel 2 aus einem Blech, an welchem der Bügelschuh 24 befestigt ist. Wahlweise kann der Befestigungsbügel 24 auch aus einem Aluminiumprofil gefertigt sein.

Nach Befestigung der Halteelemente 2 können PV-Module 3, 3', 3", 3‴ in unterschiedlichen Lagen, in unterschiedlichen Abständen zur Gebäudehüllfläche 1 bzw. zum Haltesteg 22 in Aufnahmen des Halteelementes 2 eingeschoben werden.

Anstelle eines Bügelschuhs 24 mit einer Bügelschuhstirnfläche 240, welche das Herausschieben eines PV-Moduls 3" verhindert, kann auch ein Anschlag 5 am Bügelschuh 24 und/oder der Auflagewand 23 angeordnet sein. Hier ist der Anschlag 5 als Doppelkeil 5 ausgebildet, welcher zwischen den Bügelschuhwänden 241 angeordnet ist und ein Verschieben des PV-Moduls 3" verhindert. Der Doppelkeil 5 oder ein Einfachkeil 5 kann aus Kunststoff oder Gummi hergestellt sein und in den Bügelschuh 24 eingelegt oder darin verklebt gelagert sein. Eine weitere Möglichkeit eines Anschlages ist eine Bohrung in mindestens einer Bügelschuhwand 241 durch welche ein Bolzen gesteckt oder geschraubt wird. Der Anschlag 5 sorgt dafür, dass das PV-Modul 3" nicht über das Ende des Bügelschuhs 24 hinaus geschoben werden kann. Alternativ kann der Anschlag 5 an der Auflagewand 23 fixiert sein.

Mit dem hier beschriebenen Verfahren können Gebäudehüllflächen dreilagig oder vierlagig geschuppt bedeckt werden. Die dreilagige Bedeckung wird in Figur 3 gezeigt.

Ein PV-Modul 3' einer ersten Lage 3' wird in einer ersten Richtung mit ihrem Randbereich unter den Haltesteg 22 eingeschoben. Dabei kommt der Randbereich der ersten Lage 3' zwischen der Gebäudehüllfläche 1 und der Haltestegrückseite 220 zu liegen. Die erste Lage 3' ist immer direkt an der Fassaden- oder Dachfläche 1', 1" anliegend positioniert. Da der Befestigungsbügel 2 fixiert und ausreichend stabil ist, kann die erste Lage 3' nicht mehr von der Gebäudehüllfläche 1, senkrecht zur Gebäudehüllfläche 1, wegkippen.

Dann kann ein PV-Modul einer zweiten Lage 3" in einer zweiten Richtung senkrecht zur ersten Richtung mit ihrem Randbereich auf der Auflagewand 23 liegend eingeschoben werden, wodurch es mit dem Halteelement 2 in Kontakt gebracht wird. Dieses PV-Modul der zweiten Lage 3" kann dabei teilweise auf der Haltestegvorderseite 221 aufliegen.

Der Abschnitt zwischen Auflagewand 23 und Haltestegvorderseite 221 wirkt als Schiene, in welcher die zweite Lage 3" einschiebbar lagerbar ist.

Nach der zweiten Lage 3" wird ein PV-Modul einer dritten Lage 3‴ in einer dritten Richtung auf dem Bügelschuh 24 liegend bis zum Anschlag 5 bzw. der Bügelschuhwand 241 eingeschoben.

Die zweite Lage 3" und dritte Lage 3‴ ragen über die Haltestegvorderseite 221 und die Wand 21 des Halteelements 2 in Längsrichtung L des Halteelementes 2, wobei der Randbereich auf der Auflagewand 23 aufliegt. Die dritte Lage 3‴ ist von der ersten und zweiten Lage 3', 3" und der Fassadenfläche 1 beabstandet im Halteelement 2 gelagert. Üblicherweise ist die dritte Lage 3‴ in Richtung Befestigungssteg 20 zum Halteelement 2 verkippt gelagert. Bei dieser dreilagigen geschuppten Bedeckung bleiben in den Randbereichen Ecken frei, welche mit zugeschnittenen PV-Modulen bedeckt werden müssen.

Darum bietet sich eine vierlagige geschuppte Bedeckung an, welche in Figur 4 im Detail gezeigt ist.

In Figur 4 sind PV-Module 3, 3', 3", 3‴ mit gleicher Modulhöhe A gezeigt, welche mit dem im Folgenden beschriebenen Verfahren und der Halteelemente 2 an einer Fassadenfläche 1" eingeschoben geschuppt angebracht sind.

Durch die Schuppung weist jedes PV-Modul eine verdeckte Höhe B auf, sodass nicht die gesamte Fläche des PV-Moduls 3, 3', 3", 3‴ zur Stromerzeugung beitragen kann. Dieser Fakt wird dadurch ausgeglichen, dass die Befestigung der PV-Module 3 erheblich vereinfacht ist, was zu Kostenersparnis führt. Alle PV-Module 3 werden durch die Halteelemente 2 und die Schwerkraft an der Gebäudehüllfläche 1 gehalten. Diese Art der Befestigung wiedersteht auch extremen Wetterbedingungen und kommt ohne einen Rahmenaufbau aus.

Wie in Figur 5a mit den Pfeilen gekennzeichnet, wird eine erste Lage 3' und eine Zwischenlage 3 in der ersten Richtung zwischen den Haltesteg 22 bzw. die Haltestegrückseite 220 und die Gebäudehüllfläche 1 eingeschoben. Die PV-Module der ersten Lage 3' und der Zwischenlage 3 werden dadurch in ihren Randbereichen vom Haltesteg 22 gegen ein Verkippen, weg von der Gebäudehüllfläche 1 gesichert.

Im nächsten Schritt wird die zweite Lage 3" in der zweiten Richtung senkrecht zur ersten Richtung, auf der Haltestegvorderseite 221 anliegend und mit ihrem Randberiech auf der Auflagewand 23 aufliegend eingebracht.

Abschliessend wird die dritte Lage 3‴ in der dritten Richtung mit ihrem Randbereich in den Bügelschuh 24 eingeschoben und damit mit dem Halteelement 2 in Kontakt gebracht.

Der Randbereich der dritten Lage 3‴ wird von den Bügelschuhwänden 241 umfasst. Die Bügelschuhstirnfläche 240 dient als Anschlag für das Einschieben in der dritten Richtung der dritten Lage 3‴. Die dritte Lage 3‴ ist gegen die zweite Lage 3", das Halteelement 2 und die Fassadenfläche 1 verkippt.

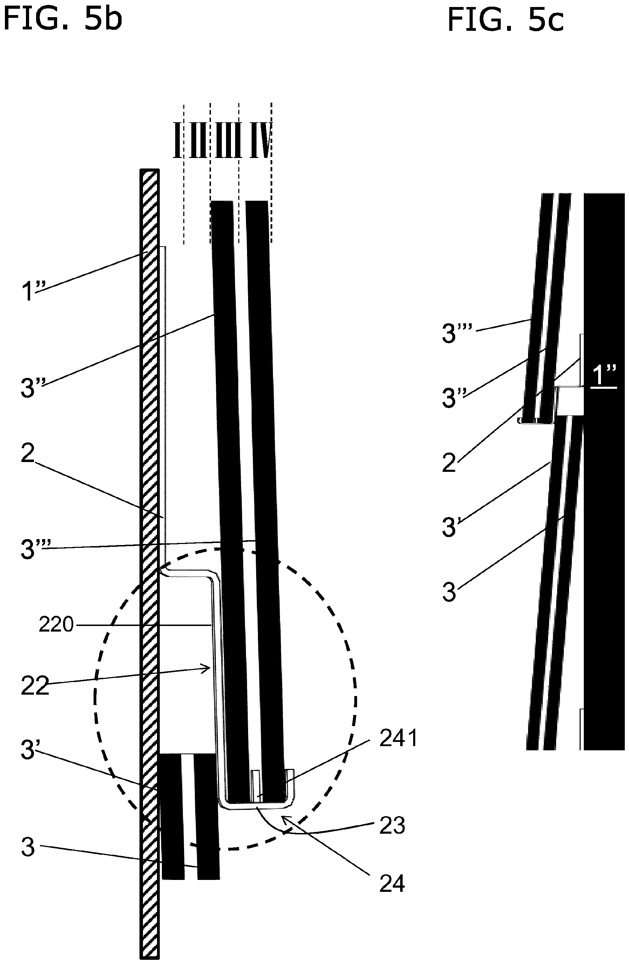

Im Randbereich der ersten bis vierten Lage 3, 3', 3", 3‴ im Bereich der Auflagewand 23 bzw. des Bügelschuhs 24 des Halteelementes 2 überlappen die einzelnen PV-Module, wodurch eine geschuppte Bedeckung erreicht wird. Im Bereich des Halteelementes 2 sind die PV-Module in vier Lagen (I bis IV), beabstandet vom Halteelement 2 und der Fassadenfläche 1 angeordnet, was in Figur 5b im Detail erkennbar ist.

Die erste Lage 3' ist direkt gegen die Fassadenfläche 1" verkippt in einer Ebene I gehalten. Die Zwischenlage 3 ist gegen die erste Lage 3' in Richtung Fassadenfläche 1" verkippt und wird mindestens teilweise vom Haltesteg 22 bzw. der Haltestegrückseite 220 gegen ein Entfernen von der Fassadenfläche 1" in einer Ebene II gehalten.

Die Zwischenlage 3 und die erste Lage 3' sind damit teilweise zwischen Haltesteg 22 und Fassadenfläche 1" gehalten.

Die zweite Lage 3" liegt teilweise angelehnt seitlich eingeschoben an den Haltesteg 22 angelehnt auf der Auflagewand 23 auf, in einer Ebene III.

In einer Ebene IV liegt die dritte Lage 3‴ angelehnt an die zweite Lage 3" seitlich in den Bügelschuh 24 eingeschoben und gehalten zwischen den Bügelschuhwänden 241. Alternativ können auch beide äusseren Lagen in einer Schiene zwischen Wand 221 und äusserer Bügelschuhwand 241 mittels Kunststoff- oder Gummiprofilen eingeklemmt werden.

Im Bereich des Halteelementes 2, im gestrichelt umrahmten Abschnitt, sind insgesamt vier verschiedene Lagen 3, 3', 3", 3‴ von PV-Modulen mit unterschiedlichen Abständen etwa senkrecht zur Gebäudehüllfläche 1 verbaut. Das Verfahren wird bis zur gewünschten Gesamtbedeckung der Fassadenfläche 1" bzw. Gebäudehüllfläche 1 durchgeführt. Die Überlappung ist in Figur 5c in einer Seitenansicht im Bereich eines Halteelementes 2 nochmals gezeigt, wobei Randbereiche der ersten und zweiten Lage 3, 3' von Randbereichen der dritten und vierten Lagen 3", 3‴ teilweise aufgrund der Schuppung verdeckt werden.

Um die Randbereiche vor allem der ersten Lage 3' der PV-Module zu schützen, ist ein Schutzprofil S, insbesondere aus einem elastischen Material wie Gummi bzw. einem Kunststoff hergestellt, eingesetzt. Das Schutzprofil S umfasst den Randbereich der ersten Lage 3' teilweise, sodass die erste Lage 3' weder direkt an der Gebäudehüllfläche 1" noch direkt an der Zwischenlage 3 anliegt, sofern eine Zwischenlage 3 verwendet wird.

Es können auch weitere Schutzprofile S an den verschiedenen Lagen 3, 3", 3‴ angeordnet werden, um ein direktes Aufliegen zu vermeiden. Durch die Anordnung von Schutzprofilen S kann eine nahezu wasserdichte Fassadenabdeckung bzw. Dachabdeckung erreicht werden.

Durch die einfache Befestigung der Halteelemente 2 auf der Gebäudehüllfläche 1 können Unebenheiten der Gebäudehüllfläche 1 problemlos ausgeglichen werden. Ungenauigkeiten in der Unterkonstruktion können bei der Montage der Halteelemente 2 einfach aufgenommen werden. Durch das Überlappen der PV-Module 3, 3', 3", 3‴ sind Unregelmässigkeiten der Gebäudehüllfläche 1 kaum sichtbar, weshalb sich diese Verfahren ausgezeichnet für Fassadenrenovationen eignet. Die geschuppte Anordnung der PV-Module 3 ersetzt die teuren Passstücke und Massanfertigungen von PV-Modulen 3. Die Halteelemente 2 können auch direkt auf eine bestehende Fassade geschraubt werden. Eine aufwändige Vermessung der Fassadenfläche vor der Bedeckung ist nicht nötig. PV-Module 3 in Standardgrössen können zur Bedeckung verwendet werden. Das Mass der Überlappung benachbarter Photovoltaikmodule 3, 3', 3", 3‴ kann durch die Positionierung der Halteelemente 2 und die gewählte Einschiebeposition der Photovoltaikmodule 3, 3', 3", 3‴ abgestimmt werden.

Das Montageverfahren eignet sich sowohl für Fassaden 1" als auch für geneigte Dachflächen 1'. Dies bringt gestalterisch die Möglichkeit, Dach und Fassade in derselben Architektursprache zu gestalten.

Um die PV-Module 3 verkabeln zu können, werden vor der Bedeckung der einzelnen Lagen Zuleitungskabel auf der Gebäudehüllfläche 1 verteilt, an welche die einzelnen PV-Module 3 mit ihren Verbindungskabeln angeschlossen werden, bevor die PV-Moduls 3 wie oben beschrieben in die Halteelemente 2 eingeschoben werden. Auch eine andere Verkabelung ist möglich, wobei verkabelte PV-Module 3 eingeschoben werden und die zugehörigen Verbindungskabel später kontaktiert und bis zum Wechselrichter geführt werden. Die Verbindungskabel und vorhandene Stecker und Buchsen sind hier nicht dargestellt.

### Hängendes System

Um eine geschuppte Bedeckung einer Fassade 1" zu erzielen, können die Halteelemente 2 auch derart ausgestaltet sein, dass die PV-Module 3, 3', 3", 3‴ mehrlagig einhängbar sind und teilweise geschuppt in ihren Überlappungsbereichen vertikal an der Fassade herabhängend montiert werden können. In den Randbereichen überlappen benachbarte PV-Module 3, 3', 3", 3‴ ebenfalls. Gegen ein Lösen sind die PV-Module 3, 3', 3", 3‴ durch die Halteelemente 2 gesichert, welche wieder fest an der Fassadenfläche 1" bzw. Dachfläche 1' fixiert sind. Damit die PV-Module 3, 3', 3", 3‴ in den Überlappungsbereichen nicht aneinanderschlagen, sind Rückhalterungen 6 vorgesehen. Als Rückhalterungen 6 sind Klebe-, Magnet- oder Klettflächen bzw. Verbindungen mittels Klebstoff, Magneten oder Klettverschlüssen einsetzbar, welche auf einem der beiden benachbarten PV-Module oder auf beiden benachbarten PV-Modulen im Überlappungsbereich angebracht werden.

Alle hier beschriebenen Montageverfahrenberuhen darauf, dass sich die Photovoltaik-Module 3, 3', 3", 3‴ gegenseitig einklemmen und fixieren jedoch in der Vertikalen gegen oben verschiebbar bleiben und nur durch die Schwerkraft in ihrer vertikalen Position gehalten werden. Die Photovoltaik-Module 3, 3', 3", 3‴ werden übereinander geschichtet, wobei die horizontalen Reihen sich direkt berühren und die vertikalen Reihen sich über die Halteelemente 2, 2' gegen ein Abkippen gegen aussen, also weg von der Fassadenfläche, zurückgehalten werden.

Um eine ungewünschte horizontale Verschiebung zu verhindern, ist auf der Rückseite jedes PV-Moduls 3, 3', 3", 3‴ ein Rippenelement aufgebracht, bevorzugt aufgeklebt. Das Rippenelement kann auf der Unterkonstruktion eingerastet sein bzw. an einem auf der Unterkonstruktion montiertem Gegenstück des Rippenelementes eingehakt bzw. eingerastet sein, wobei nur die horizontale Verschiebung verhindert ist. Die PV-Module 3, 3', 3", 3‴ bleiben vertikal gegen oben ständig verschiebbar, weshalb ein Auswechseln eines beschädigten PV-Moduls 3, 3', 3", 3‴ in der gesamten Fassade einfach von Hand mit einer Verschiebung nach oben erfolgen kann.

Für gesteigerte Zerstörungssicherheit sind auf der Rückseite jedes PV-Moduls 3, 3', 3", 3‴ im Bereich der Ecken, in welchen eine Überlagerung der PV-Module 3, 3', 3", 3‴ erfolgt und damit eine direkte Berührung stattfindet, Gummi- oder Kunststoffelemente aufgeklebt. Um auch das ungewünschte horizontale Verrutschen von geschuppt verlegten PV-Modulen 3, 3', 3", 3‴ relativ zueinander zu verhindern, kann das Rippenelement an einer der Ecken jedes PV-Moduls 3, 3', 3", 3‴ auf der Rückseite aufgeklebt sein.

Die beschriebenen Photovoltaikmodule 3, 3', 3", 3‴ unterscheiden sich von einer Glastafel nicht nur durch die Mehrlagigkeit inklusive photovoltaische Lage, der elektrischen Verkabelung bzw. Anordnung elektrischer Bauteile, sondern auch durch die auf der Rückseite und/oder Frontseite jedes PV-Moduls 3, 3', 3", 3‴ angebrachten Zusatzelement zum Schutz der PV-Module 3, 3', 3", 3‴.

### Bezugszeichenliste

1 Gebäudehüllfläche
1' Dach
1" Fassade
2, 2' Halteelement / Befestigungsbügel
   20 Befestigungssteg
      200 Durchgangsloch
   21 Wand
      210 Rückseite erster Auflagewand
   22 Haltesteg
      220 Haltestegrückseite
      221 Haltestegvorderseite
   23 Auflagewand
   24 Bügelschuh
      240 Bügelschuhstirnfläche
      241 Bügelschuhwand
   L Halteelementlängsachse
3 PV-Modul
   3 Zwischenlage
   3' erste Lage
   3" zweite Lage
   3‴ dritte Lage
   A Modulhöhe
   B verdeckte Höhe
   S Schutzprofil (Gummi oder Kunststoff)
4, 4' Befestigungsmittel
5 Anschlag (Befestigungskeil, Doppelkeil, Bolzen)
6 Rückhalterung

## Patentansprüche

1. Mittel für die Bedeckung von Gebäudehüllflächen (1) mit Photovoltaikmodulen (3, 3', 3", 3‴) umfassend ein Halteelement (2), welches an einer Gebäudehüllfläche anbringbar ist,
**dadurch gekennzeichnet, dass**
dieses die Form eines Befestigungsbügels (2) mit mindestens dreilagiger Aufnahmemöglichkeit zur mindestens annähernd senkrecht von der Gebäudehüllfläche (1) beabstandeten Lagerung von Photovoltaikmodulen (3, 3', 3", 3‴) aufweist, und sich in Richtung einer Halteelementlängsachse (L) erstreckend einen Befestigungssteg (20), eine Wand (21), einen Haltesteg (22), eine Auflagewand (23) und einen Bügelschuh (24) umfasst, wobei zwischen Wand (21) und Befestigungssteg (20) bzw. Haltesteg (22) ein Winkel von mindestens annähernd 90° vorhanden ist, wobei die Auflagewand (23) am von der Wand (21) abgewandten Ende des Haltestegs (22) abgewinkelt angeordnet ist und vom Haltesteg (22) annähernd senkrecht wegweist, wobei auf der Auflagewand (23) der Bügelschuh (24) angeordnet ist, wobei im Bereich der Auflagewand (23) bzw. des Bügelschuhs (24) des Halteelements (2) die einzelnen Photovoltaikmodule (3, 3', 3", 3‴) überlappbar sind, wodurch eine geschuppte Bedeckung erreicht wird, wobei der Einschub der ersten Lage (3') zwischen den Haltesteg (22) des Haltelementes (2) und der Gebäudehüllfläche (1) möglich ist, und der Randbereich der zweiten und dritten Lage (3", 3‴) auf der Auflagewand (23) des Halteelementes (2) liegen kann, so dass die Photovoltaikmodulen (3, 3', 3", 3‴) vertikal hängend montiert werden können.

2. Mittel nach Anspruch 1, wobei das Halteelement (2) mindestens ein Durchgangsloch (200), den Befestigungssteg (20) querend, aufweist.

3. Mittel nach Anspruch 1, wobei ein Anschlag (5) an der Auflagewand (23) angeordnet ist.

4. Mittel nach Anspruch 1, wobei der Bügelschuh (24) zwei Bügelschuhwände (241) und einen Anschlag (5, 240) umfasst, wodurch die Einschubtiefe des PV-Moduls (3‴) der äusseren Lage in einer Richtung begrenzt ist.

5. Mittel nach Anspruch 4, wobei der Anschlag (5) in Form einer Bügelschuhstirnfläche (240), eines Einfachkeils oder eines Doppelkeils (5) ausgestaltet ist.

6. Mittel nach Anspruch 4, wobei der Anschlag (5) aus Kunststoff oder Gummi hergestellt ist.

7. Verwendung von Photovoltaikmodulen (3, 3', 3", 3‴) für die Bedeckung von Gebäudehüllflächen (1), mit Hilfe von Mitteln gemäss Anspruch 1,
**dadurch gekennzeichnet, dass**
eine Mehrzahl von Halteelementen (2) flächig auf der Gebäudehüllfläche (1) verteilt ist und
die Randbereiche von mindestens drei Lagen von Photovoltaikmodulen (3, 3', 3", 3‴) eingeschoben oder eingehängt sind und an den Halteelementen (2) derart befestigt sind, dass mindestens eine erste Lage (3') in Richtung einer Halteelementlängsachse (L) gelagert ist, wobei die PV-Module (3, 3', 3", 3‴) in ihren Randbereichen mittels Halteelement (2) in einer Richtung senkrecht zur Gebäudehüllfläche (1) beabstandet gehalten sind und eine Schuppung der benachbarten Photovoltaikmodule (3, 3', 3", 3‴) mit mindestens teilweiser Überlappung aller angrenzenden mindestens drei Photovoltaikmodulflächen resultiert.

8. Verfahren für die Bedeckung von Gebäudehüllflächen (1) mit Photovoltaikmodulen (3, 3', 3", 3‴), wobei eine vertikal verschiebbare Halterung der Photovoltaikmodule (3, 3', 3", 3‴) resultiert,
**gekennzeichnet durch die Schritte:**
Befestigung einer Mehrzahl von Mitteln nach einem der Ansprüche 1 bis 6 flächig verteilt auf der Gebäudehüllfläche (1), sukzessives Einschieben oder Einhängen der Randbereiche von mindestens drei Lagen von Photovoltaikmodulen (3, 3', 3", 3‴) und Befestigung an den Halteelementen (2), wobei mindestens eine erste Lage (3') in Richtung einer Halteelementlängsachse (L) eingeschoben oder eingehängt wird, wobei die PV-Module (3, 3', 3", 3‴) in ihren Randbereichen mittels Halteelement (2) in einer Richtung senkrecht zur Gebäudehüllfläche (1) beabstandet gehalten werden und eine Schuppung der benachbarten Photovoltaikmodule (3, 3', 3", 3‴) mit mindestens teilweiser Überlappung aller angrenzenden mindestens drei Photovoltaikmodulflächen resultiert,
wobei die Halteelemente (2) eine mindestens dreilagige Aufnahmemöglichkeit aufweisen, sodass nach Einschub oder Einhängen der ersten Lage (3') in einer ersten Richtung zwischen einen Haltesteg (22) des Haltelementes (2), die zweite Lage (3") in einer zweiten Richtung senkrecht zur ersten Richtung eingehängt oder mit ihrem Randbereich auf einer Auflagewand (23) des Halteelementes (2) liegend eingeschoben wird und anschliessend eine dritte Lage (3‴) in einer dritten Richtung senkrecht zur ersten Richtung eingehängt oder auf einem Bügelschuh (24) des Halteelementes (2) liegend zwischen Bügelschuhwände (241) bis zu einem Anschlag (5) oder einer Bügelschuhwand (241) eingeschoben wird, wodurch eine mindestens annähernd senkrecht von der Gebäudehüllfläche (1) beabstandete geschuppte Lagerung der Photovoltaikmodule (3) resultiert.

9. Verfahren nach Anspruch 8, wobei die Halteelemente (2) eine mindestens vierlagige Aufnahmemöglichkeit aufweisen und eine Zwischenlage (3) zwischen den Haltesteg (22) bzw. die erste Lage (3') und die Gebäudehüllfläche (1) in Richtung der ersten Richtung eingehängt oder eingeschoben wird, wodurch die PV-Module (3, 3', 3", 3‴) vierlagig geschuppt mit mindestens einem Halteelement (2) lösbar verbindbar sind.

10. Verfahren nach Anspruch 9, wobei die erste Lage (3') oder die Zwischenlage (3) durch eine Haltestegrückseite (220) des Haltestegs (22) des Halteelementes (2) gegen Abkippen von der Gebäudehüllfläche (1) gehalten ist und die zweite Lage (3") auf einer Auflagewand (23) des Halteelementes (2), gehalten durch eine Haltestegvorderseite (221) des Haltestegs (22), gelagert wird.

11. Verfahren nach Anspruch 8, wobei das Mass der Überlappung benachbarter Photovoltaikmodule (3, 3', 3", 3‴) durch die Positionierung der Halteelemente (2) und die gewählte Einschiebeposition der Photovoltaikmodule (3, 3', 3", 3‴) im Halteelement (2) abstimmbar ist.

12. Verfahren nach Anspruch 8, wobei die Verkabelung der PV-Module (3, 3', 3", 3‴) zeitlich vor dem Einschieben der PV-Module (3, 3', 3", 3‴) in die Halteelemente (2) erfolgt, indem vorgängig Zuleitungskabel auf der Gebäudehüllfläche (1) verteilt wurden, an welchen Verbindungskabel der PV-Module (3, 3', 3", 3‴) befestigt werden bevor verkabelte PV-Module (3, 3', 3", 3‴) in die Halteelemente (2) eingeschoben werden.

13. Verfahren nach Anspruch 8, wobei die PV-Module (3, 3', 3", 3‴) vertikal hängend montiert werden und in ihren Randbereichen dreifach oder vierfach geschuppt angeordnet werden und die überlappenden Randbereiche mittels Rückhalterung (6), insbesondere in Form eines Klettverschlusses, einer Magnetverbindung oder mittels Klebestoff verbunden werden, um ein hochklappen der PV-Module bei Windsog zu verhindern.

## Claims

1. Means for covering building envelopes (1) with photovoltaic modules (3, 3', 3", 3‴) comprising a retaining element (2) which can be attached to a building envelope,
**characterized by** the fact that
this has the form of a fastening bracket (2) with at least three-layer mounting possibility for the storage of photovoltaic modules (3, 3', 3", 3‴) at least approximately vertically from the building envelope surface (1), and extends in the direction of a longitudinal axis of the retaining element (L) comprising a fastening bar (20), a wall (21), a retaining bar (22), a support wall (23) and an ironing shoe (24), wherein between wall (21) and fastening bar (20) or retaining bar (22) a angle of at least approximately 90°, wherein the support wall (23) is arranged at an angled angle at the end of the retaining bar (22) facing away from the wall (21) and points approximately vertically away from the retaining bar (22), wherein the support wall (23) the ironing shoe (24) is arranged, wherein in the area of the support wall (23) or the ironing shoe (24) of the retaining element (2) the individual photovoltaic modules (3, 3', 3", 3‴), whereby a shingled covering is achieved, whereby the insertion of the first layer (3') between the retaining bar (22) of the retaining element (2) and the building envelope (1) is possible, and the edge area of the second and third layers (3", 3‴) can lie on the support wall (23) of the retaining element (2), so that the photovoltaic modules (3, 3', 3", 3‴) can be mounted vertically hanging.

2. A means according to claim 1, wherein the retaining element (2) has at least one through hole (200) crossing the fastening bar (20).

3. A means according to claim 1, wherein a stop (5) is arranged on the support wall (23).

4. The means according to claim 1, wherein the ironing shoe (24) comprises two ironing shoe walls (241) and one stop (5, 240), whereby the insertion depth of the PV module (3‴) of the outer layer is limited in one direction.

5. The means according to claim 4, wherein the stop (5) is designed in the form of an ironing shoe front surface (240), a single wedge or a double wedge (5).

6. A means according to claim 4, wherein the stop (5) is made of plastic or rubber.

7. The use of photovoltaic modules (3, 3', 3", 3‴) for covering building envelope surfaces (1), by means according to claim 1
, **characterised in that**
a plurality of retaining elements (2) are distributed over a flat area on the building envelope surface (1) and the edge areas of at least three layers of photovoltaic modules (3, 3', 3", 3‴) are inserted or hooked in and are attached to the retaining elements (2) in such a way, that at least one first layer (3') is supported in the direction of a longitudinal axis of the retaining element (L), whereby the PV modules (3, 3", 3‴) are kept at their edges in their peripheral areas by means of a retaining element (2) in one direction perpendicular to the building envelope surface (1) and a scaling of the neighbouring photovoltaic modules (3, 3', 3", 3‴) results with at least partial overlap of all adjacent at least three photovoltaic module surfaces.

8. A method for covering building envelope surfaces (1) with photovoltaic modules (3, 3', 3", 3‴), resulting in a vertically movable bracket of the photovoltaic modules (3, 3', 3", 3"),
**characterised by the steps:**
Fastening a plurality of means according to one of claims 1 to 6 distributed over a large area on the building envelope surface (1),
successively inserting or hooking in the edge areas of at least three layers of photovoltaic modules (3, 3', 3", 3") and
fastening them to the retaining elements (2), whereby at least one first layer (3') is inserted or hooked in the direction of a longitudinal axis of the retaining element (L), whereby the PV modules (3, 3', 3", 3‴) are kept at a distance in their peripheral areas by means of a retaining element (2) in one direction perpendicular to the building envelope surface (1) and a scaling of the adjacent photovoltaic modules (3, 3", 3", 3‴) with at least partial overlap of all adjacent at least three photovoltaic module surfaces,
wherein the retaining elements (2) have a mounting option of at least three layers, so that after insertion or hooking in of the first layer (3') in a first direction between a retaining bar (22) of the retaining element (2), the second layer (3") is suspended in a second direction perpendicular to the first direction or is inserted with its edge area lying on a support wall (23) of the retaining element (2) and then a third layer (3‴) is inserted in a third direction perpendicular to the in the first direction or lying on an ironing shoe (24) of the retaining element (2) between ironing shoe walls (241) up to a stop (5) or an ironing shoe wall (241), resulting in a scaled bearing of the photovoltaic modules (3) at least approximately vertically separated from the building envelope surface (1).

9. The method according to claim 8, wherein the retaining elements (2) have a mounting possibility of at least four layers and an intermediate layer (3) between the retaining bar (22) or the first layer (3') and the building envelope surface (1) is suspended or pushed in in the direction of the first direction, whereby the PV modules (3, 3', 3", 3‴) can be shingled in four layers and connected to at least one retaining element (2) in a detachable manner.

10. The method according to claim 9, wherein the first layer (3') or the intermediate layer (3) is held by a retaining bar rear (220) of the retaining bar (22) of the retaining element (2) against tipping from the building envelope surface (1) and the second layer (3") is supported on a support wall (23) of the retaining element (2), held by a retaining bar front (221) of the retaining bar (22).

11. The method according to claim 8, wherein the extent of the overlap of adjacent photovoltaic modules (3, 3', 3", 3‴) is tunable by the positioning of the retaining elements (2) and the selected insertion position of the photovoltaic modules (3, 3', 3", 3‴) in the retaining element (2).

12. The method of claim 8, wherein the wiring of the PV modules (3, 3', 3", 3‴) is carried out in time before the PV modules (3, 3", 3", 3') are inserted into the retaining elements (2) by distributing supply cables on the building envelope surface (1) to which connecting cables of the PV modules (3, 3', 3", 3") are attached before wired PV modules (3, 3', 3", 3') are inserted into the retaining elements (2).

13. The method of claim 8, wherein the PV modules (3, 3', 3", 3‴) are mounted vertically suspended and arranged in a triple or quadruple shingled manner at their edge areas and the overlapping edge areas are connected by means of a rear bracket (6), in particular in the form of a Velcro fastener, a magnetic connection or by means of glue, in order to prevent the PV modules from folding up in the event of wind suction.

## Revendications

1. Moyens de revêtement d'enveloppes de bâtiments (1) avec des modules photovoltaïques (3, 3', 3", 3‴) comprenant un élément de retenue (2) pouvant être fixé à une enveloppe de bâtiment,
**caractérisée par le fait que**
celui-ci a la forme d'un support de fixation (2) avec une possibilité de montage à au moins trois couches pour le stockage de modules photovoltaïques (3, 3', 3", 3‴) au moins approximativement verticalement à partir de la surface de l'enveloppe du bâtiment (1), et s'étend dans la direction d'un axe longitudinal de l'élément de retenue (L) comprenant une barre de fixation (20), une paroi (21), une barre de retenue (22), une paroi de support (23) et un fer de repassage (24), dans lesquels entre la paroi (21) et la barre de fixation (20) ou la barre de retenue (22) un angle d'au moins environ 90°, dans lequel la paroi de support (23) est disposée à un angle incliné à l'extrémité de la barre de retenue (22) face à la paroi (21) et pointe approximativement verticalement à l'opposé de la barre de retenue (22), dans lequel la paroi de soutènement (23) le sabot de repassage (24) est disposé, dans la zone de la paroi de soutènement (23) ou du sabot de repassage (24) de l'élément de soutènement (2) les modules photovoltaïques individuels (3, 3', 3", 3'"), permettant d'obtenir un revêtement en bardeaux, permettant l'insertion de la première couche (3') entre la barre de soutènement (22) de l'élément de soutènement (2) et l'enveloppe du bâtiment (1), Et la zone de bord des deuxième et troisième couches (3", 3‴) peut reposer sur la paroi de support (23) de l'élément de soutènement (2), de sorte que les modules photovoltaïques (3, 3', 3", 3‴) peuvent être montés verticalement suspendus.

2. Moyen selon la revendication 1, dans lequel l'élément de retenue (2) comporte au moins un trou traversant (200) traversant la barre de fixation (20).

3. Moyen selon la revendication 1, dans lequel une butée (5) est disposée sur la paroi de support (23).

4. Dispositif selon la revendication 1, dans lequel le sabot de repassage (24) comprend deux parois de sabot de repassage (241) et une butée (5, 240), la profondeur d'insertion du module PV (3‴) de la couche extérieure étant limitée dans une direction.

5. Moyens selon la revendication 4, dans lequel la butée (5) est conçue sous la forme d'une surface avant de chaussure de repassage (240), d'une cale simple ou d'une cale double (5).

6. Moyen selon la revendication 4, dans lequel la butée (5) est en plastique ou en caoutchouc.

7. Utilisation de modules photovoltaïques (3, 3', 3", 3‴) pour le recouvrement de surfaces d'enveloppe du bâtiment (1), par des moyens selon la revendication 1
, **caractérisée en ce qu**
'une pluralité d'éléments de retenue (2) sont répartis sur une surface plane de la surface de l'enveloppe du bâtiment (1) et les zones de bord d'au moins trois couches de modules photovoltaïques (3, 3', 3", 3‴) sont insérés ou accrochés et sont fixés aux éléments de retenue (2) de telle sorte qu'au moins une première couche (3') est soutenue dans la direction d'un axe longitudinal de l'élément de retenue (L), les modules PV (3, 3", 3‴) étant maintenus à leurs bords dans leurs zones périphériques au moyen d'un élément de retenue (2) dans une direction perpendiculaire à la surface de l'enveloppe du bâtiment (1) et d'un L'entartrage des modules photovoltaïques voisins (3, 3', 3", 3‴) se traduit par un chevauchement au moins partiel de toutes les surfaces adjacentes d'au moins trois modules photovoltaïques.

8. Procédé de recouvrement de surfaces d'enveloppe de bâtiment (1) avec des modules photovoltaïques (3, 3', 3", 3‴, aboutissant à un support mobile verticalement des modules photovoltaïques (3, 3', 3", 3"),
**caractérisé par les étapes** :
Fixation d'une pluralité de moyens selon l'une des revendications 1 à 6 répartis sur une grande surface sur la surface de l'enveloppe du bâtiment (1),
insérer ou accrocher successivement dans les zones de bord d'au moins trois couches de modules photovoltaïques (3, 3', 3", 3") et les fixer aux éléments de retenue (2), en insérant ou en accrochant au moins une première couche (3') dans la direction d'un axe longitudinal de l'élément de retenue (L), les modules photovoltaïques (3, 3', 3", 3‴) sont maintenus à distance dans leurs zones périphériques au moyen d'un élément de retenue (2) dans une direction perpendiculaire à la surface de l'enveloppe du bâtiment (1) et d'une échelle des modules photovoltaïques adjacents (3, 3", 3", 3‴) avec un chevauchement au moins partiel de toutes les surfaces adjacentes d'au moins trois modules photovoltaïques,
dans lequel les éléments de retenue (2) ont une option de montage d'au moins trois couches, de sorte qu'après l'insertion ou l'accrochage de la première couche (3') dans une première direction entre une barre de retenue (22) de l'élément de retenue (2), la deuxième couche (3") est suspendue dans une seconde direction perpendiculaire à la première direction ou est insérée avec sa zone de bord reposant sur une paroi de support (23) de l'élément de soutènement (2) et ensuite Une troisième couche (3‴) est insérée dans une troisième direction perpendiculaire à la dans la première direction ou reposant sur un sabot de repassage (24) de l'élément de retenue (2) entre les parois du sabot de repassage (241) jusqu'à une butée (5) ou une paroi de sabot de repassage (241), ce qui permet d'obtenir un relèvement à l'échelle des modules photovoltaïques (3) au moins approximativement séparés verticalement de la surface de l'enveloppe du bâtiment (1).

9. Procédé selon la revendication 8, dans lequel les éléments de retenue (2) ont une possibilité de montage d'au moins quatre couches et une couche intermédiaire (3) entre la barre de retenue (22) ou la première couche (3') et la surface de l'enveloppe du bâtiment (1) est suspendue ou poussée dans la direction de la première direction, les modules PV (3, 3', 3", 3‴) peuvent être recouverts de bardeaux en quatre couches et reliés à au moins un élément de retenue (2) de manière détachable.

10. Procédé selon la revendication 9, dans lequel la première couche (3') ou la couche intermédiaire (3) est maintenue par une barre de retenue à l'arrière (220) de la barre de retenue (22) de l'élément de retenue (2) contre le basculement de la surface de l'enveloppe du bâtiment (1) et la seconde couche (3") est soutenue sur une paroi de support (23) de l'élément de retenue (2), maintenue par une barre de retenue à l'avant (221) de la barre de retenue (22).

11. Procédé selon la revendication 8, dans lequel l'étendue du chevauchement de modules photovoltaïques adjacents (3, 3', 3", 3‴) est accordable par le positionnement des éléments de retenue (2) et la position d'insertion choisie des modules photovoltaïques (3, 3', 3", 3‴) dans l'élément de retenue (2).

12. Procédé selon la revendication 8, dans lequel le câblage des modules PV (3, 3', 3", 3‴) est effectué à temps avant que les modules PV (3, 3", 3", 3") ne soient insérés dans les éléments de retenue (2) en répartissant les câbles d'alimentation sur la surface de l'enveloppe du bâtiment (1) auxquels les câbles de connexion des modules PV (3, 3', 3", 3") sont fixés avant que les modules PV câblés (3, 3', 3", 3') ne soient insérés dans les éléments de retenue (2).

13. Procédé selon la revendication 8, dans lequel les modules PV (3, 3', 3", 3‴) sont montés verticalement suspendus et disposés de manière à trois ou quatre bardeaux sur leurs zones de bord et les zones de bord qui se chevauchent sont reliées au moyen d'un support arrière (6), en particulier sous la forme d'une fermeture Velcro, d'une connexion magnétique ou au moyen de colle, afin d'éviter que les modules PV ne se replient en cas d'aspiration du vent.
